# EUROPEAN PATENT APPLICATION

(11) **EP 0 528 747 A1**
(43) Date of publication of application: **24.02.1993**
(21) Application number: 92500103.4
(22) Date of filing: 06.08.1992
(51) Int. Cl.: F02B 53/00, F01C 1/344

(54) **Rotary internal combustion engine**

(30) Priority: 09.08.1991 ES 9101869
(71) Applicant: Madrigal Suarez, Emilio, E-28230 Las Rozas (Madrid) (ES)
(72) Inventor: Madrigal Suarez, Emilio, E-28230 Las Rozas (Madrid) (ES)
(74) Representative: Gil-Vega, Victor

(57) **Abstract**

It is constructed on the basis of a cylindrical rotor (1) and a stator (2) which may have any configuration but which in any case will incorporate a sector which is coaxial with the rotor (1), in which sector both elements will be virtually tangential, defining a virtually zero space between them, the rotor (1) incorporating a plurality of elements (5) which are movable in the manner of blades, which fit into respective housings (6) and which tend to be projected radially through the effect of respective springs (7), so that these blades (5) determine, between the rotor and the stator, chambers (4) with a volume which varies during the revolution of the rotor and which determine, in their turn, the induction, compression, combustion, exhaust and outlet phases of the engine, for which purpose the corresponding nozzles are established in the stator (2).

## Description

### SUBJECT OF THE INVENTION

The present invention relates to an internal combustion engine, that is to say an engine of the type which uses petrol or gas oil as fuel, the engine also being a rotary engine, that is to say that each operating cycle thereof, and, more specifically, each combustion, determines a direct gyratory or angular force on the shaft thereof, instead of providing a reciprocating movement to a series of pistons which transmit it to the shaft by means of connecting rods and by means of a crankshaft configuration for the latter.

### BACKGROUND OF THE INVENTION

Virtually all internal combustion engines currently existing on the market are reciprocating engines, that is to say engines provided with straight cylinders and pistons which fit inside them, which, as has just been mentioned, transmit their reciprocating movement by means of respective connecting rods to the shaft of the engine, consisting of a crankshaft, which is thus subjected to a gyratory movement.

The fundamental problem with reciprocating engines centres around their low performance level.

Also known are rotary engines, in which the effect of the internal combustion gives rise directly to a gyratory movement in a movable element or rotor which is fitted inside a fixed element, rotary engines theoretically giving an output which is considerably higher than that of reciprocating engines but which, nevertheless, have so far, by their very design, posed additional problems of various types which has meant that, hitherto, and of the many original ideas which have been presented, only the known Wankel engine has been built, which has not given the results that were anticipated and is, in addition, of highly complex structure. Its development has therefore not prospered and it has been virtually abandoned at the present time.

### DESCRIPTION OF THE INVENTION

The rotary internal combustion engine proposed by the invention is a major advance in the technological evolution of rotary engines, offering extraordinary simplicity with the consequent and direct effect this has in terms of manufacture. At the same time, the engine gives a high output deriving from very high compression and also offers a high degree of versatility and can be applied in any industry, equally in the automobile, naval, aeronautical and thermal industry.

More specifically, the rotary internal combustion engine proposed by the invention is a continuous cycle engine in which compression is achieved as a function of the asymmetry which exists between a fixed element or stator and a movable element or rotor, of variable geometry, partially concentric with the stator.

More specifically, the engine proposed by the invention has a stator/rotor whose surfaces are coincident over a wide angular sector corresponding to the rotation of the latter, in the zone of maximum compression, and another sector in which both elements are substantially separate and where the phases of expansion/exhaust and induction/compression of the mixture take place.

Additionally, the rotor is provided with a plurality of radial housings receiving a series of suitably sealed elements which are movable in the manner of blades, which tend to be projected radially with respect to the inner surface of the stator, on which they establish a hermetic seal, and which are retractable against the tension of respective springs so that these movable elements are elements forming compartments which determine, by their very number, the number of combustions or cycles of the engine at each revolution of the rotor.

Provision has also been made for said stator to incorporate, in the space defined between every two adjacent movable elements or blades, a cavity which, with its own volume, will determine the level of maximum compression for the fuel/combustible mixture, obviously at the moment when the stator and rotor are at their point of maximum surface contact.

From an operating standpoint, the engine constructed in this manner will be assisted by nozzles, injectors, sparkplugs, etc., that is to say by all those accessories which are necessary to perform the conventional operating phases of any internal combustion engine.

Similarly, and as is also conventional, said engine will be assisted, in addition to the assistance given by sealing means between its movable elements and its fixed elements, by the relevant circuits for lubricating oil and coolant water.

### DESCRIPTION OF THE DRAWINGS

In order to supplement the description being given and with the aim of assisting better comprehension of the characteristics of the invention, the present description is accompanied, as an integral part thereof, by a set of drawings which show the following in an illustrative and non-limiting manner:

Figure 1 - shows a diagrammatic view in transverse section of a rotary internal combustion engine produced in accordance with the object of the present invention.

Figure 2 - shows, also in a diagrammatic view, a longitudinal section thereof.

Figure 3 - shows various diagrammatic views of similar engines with a different number of blades and, consequently, with a different number of operating cycles per revolution.

Figure 4 - shows various possibilities for the combination of the various cylinders in an engine unit.

Figure 5 - shows, finally, various possibilities for the combination of different assemblies of cylinders like those in the previous figure.

### PREFERRED EMBODIMENT OF THE INVENTION

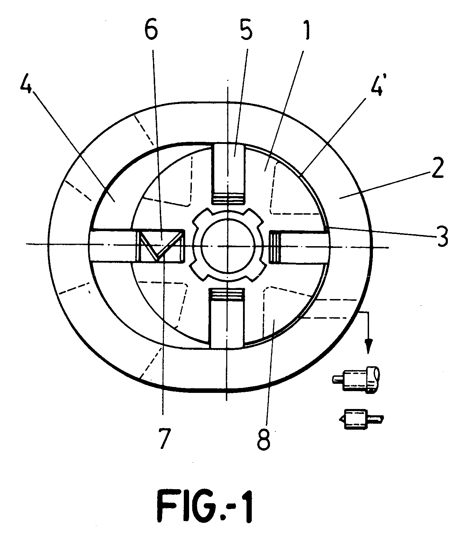

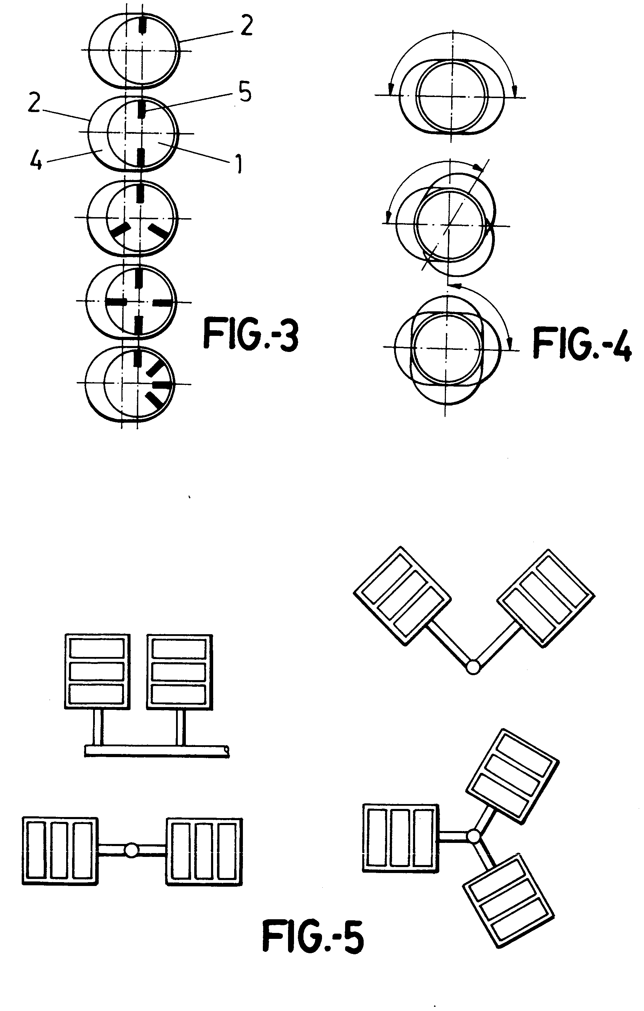

With reference to these figures and, more specifically, to Figure 1, it may be observed how the internal combustion engine proposed by the invention consists of a movable element or rotor (1), preferably of cylindrical configuration, which fits inside a fixed element or stator (2), in which a sector (3) coaxial with the rotor (1) is defined, such as, for example, a semicylindrical sector, whilst the rest of the stator (2) is oversized with respect to the rotor (1), both elements defining between them a chamber (4) of variable volume, which chamber is divided into compartments by a series of movable elements or blades (5) suitably received in radial housings (6) of the rotor (1), which blades (5) tend to be projected outwards by respective springs (7) and, consequently, are held permanently in contact with the inner surface of the stator (2), the number of these blades (5) being variable, as shown in Figure 3, as a function of whether it is desired to achieve one combustion per revolution, two combustions per revolution, three combustions per revolution, four combustions per revolution or "N" combustions per revolution.

In accordance with this structure, in the gyratory movement of the rotor (1), each subchamber (4′) defined between two consecutive blades (5) passes from a situation in which its volume is zero, from the theoretical standpoint, to a first phase in which said volume is increasing, corresponding to the intake phase; it next passes to a phase of decreasing volume, corresponding to the compression phase, up to a maximum compression defined by the existence of cavities (8) established in the rotor between each pair of blades (5) after which, and in the second revolution of the rotor, the phases of combustion/expansion and outlet again take place.

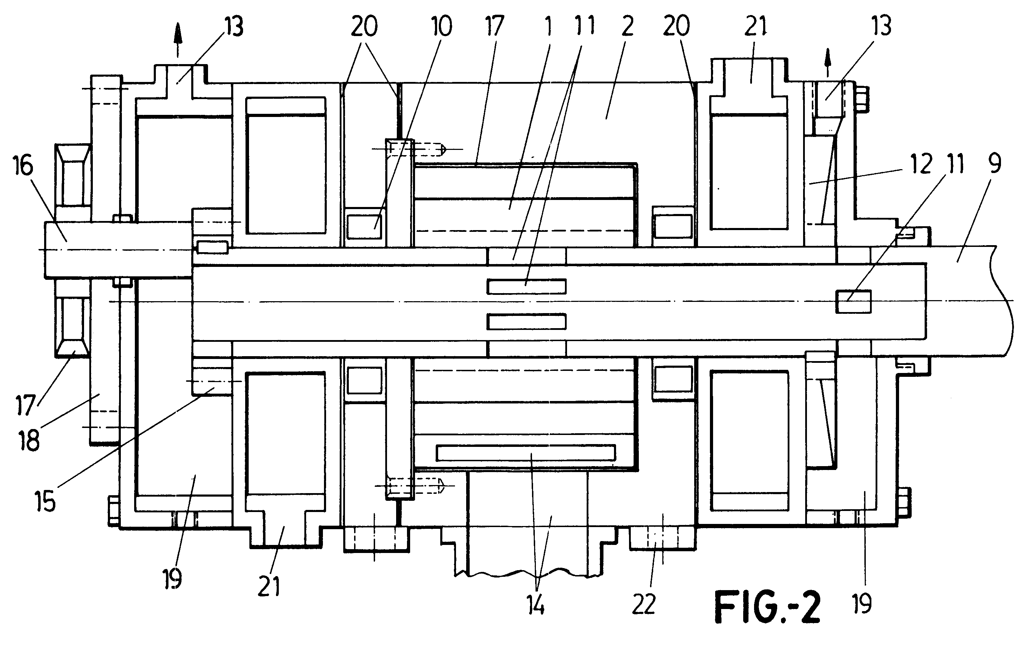

To supplement the structure described and as is, in turn, observed in Figure 2, the rotor (1) is suitably fixed to the main shaft (9) which rotates with respect to the stator (2) with the collaboration of bearings (10), the said shaft (9) being hollow and incorporating a plurality of nozzles (11) for lubricating both the rotor (1) and its blades (5), oil being moved by a pump (12) and driven in a closed circuit, via the ports (13), to an oil-filtering and oil-cooling system, the corresponding inlet port which is not visible in this figure, and expulsion port (14) obviously being provided in the stator (2), the shaft (9) having a gear (15) for moving the secondary shaft (16) of the pulley (17) of the dynamo and the ignition system, on which secondary shaft (16) is mounted, in turn, the flywheel (18) of the starter motor, the said gear (15) being immersed in the oil sump (19) in which the abovementioned pump (12) operates, gaskets (20) participating in the assembly and the rotor/stator assembly being framed axially by a water-cooling system (21), the stator (2) obviously having anchoring devices (22) for suitably fastening the engine to the corresponding support bracket.

In accordance with this basic structure and as shown in Figure 4, the cylinder elements remaining constant, so that mass production thereof is feasible, the combination of such cylinders permits two alternatives, on the one hand simultaneous combustions in symmetrical positions, that is to say with an angle of offset of 180°, thus achieving maximum torque, or alternatively consecutive combustions in asymmetrical positions, which means a reduction in the angle of offset and, consequently, greater regularity.

On the other hand, and as shown, in turn, in Figure 5, the cylinder assemblies in the previous figure may, in turn, be combined in different ways to drive a common shaft, such as, for example, the parallel, symmetrical, "V" and triangular arrangements in the said Figure 5.

In any case, in accordance with the aims of the invention, maximum structural simplicity and optimum operating performance levels are achieved, with, especially, a high output and a high degree of versatility.

It is considered unnecessary to expand this description for any expert in the field to comprehend the scope of the invention and the advantages derived therefrom.

The materials, form, size and arrangement of the elements may be varied, provided this does not constitute a departure from the essential nature of the invention.

The terms in which this specification has been described must always be taken in their widest and non-limiting sense.

## Claims

1. Rotary internal combustion engine which, being of the type having a fixed element or stator (2) and a movable element or rotor (1), is characterised in that the said rotor (1) has a cylindrical configuration, whilst the stator (2), which may have any configuration, provided that a sector thereof is coaxial with the rotor (1), a chamber of theoretically zero thickness being defined between both elements, with the special characteristic that the rotor (1) being provided with plurality of radial housings (7), variable in number and equiangularly distributed over its periphery, occupied by individual elements (5) which can move, in the manner of blades, which, assisted by respective springs (7), permanently have to be projected towards the inner surface of the stator (2), determining a perimetrical line of chambers (4) between stator and rotor, the chambers being variable in number and perfectly mutually sealed or made mutually independent, all this so that, during the revolution of said rotor (1), the chambers (4) undergo progressive variations in volume, in a direction of decrease and in a direction of increase, corresponding to the induction/compression and combustion/expansion phases of the fuel/combustible mixture supplied to the engine, provision also having been made for the rotor (1) to incorporate, between each pair of adjacent blades (5), a cavity (8) of any volume suitable for the said mixture to reach the desired degree of maximum compression.

2. Rotary internal combustion engine according to Claim 1, characterised in that the main shaft (9), to which the rotor (1) is firmly attached, is hollow and incorporates nozzles (11) for the passage of the oil and lubricant, originating from a sump (19), assisted by the corresponding pump (12) for driving the oil towards the filtering and cooling circuit, there being established in said sump (19) a gear (15) for transmitting a movement to a secondary shaft (16) on which is fitted the pulley (17) for the dynamo and the flywheel (18) for the starter motor, the rotor (1) being fitted on a stator (2) by means of bearings (10) and being sealed with the collaboration of gaskets (20), induction (14) and exhaust ports also being established on said stator, as well as, if appropriate, the means of ignition of the mixture.
